# EUROPEAN PATENT SPECIFICATION

(11) **EP 2 007 211 B1**
(45) Date of publication and mention of the grant of the patent: **22.08.2012**
(21) Application number: 07710814.0
(22) Date of filing: 21.03.2007
(51) Int. Cl.: A23C 3/033, A23C 9/20

(54) **METHOD FOR THE TREATMENT OF HUMAN MILK**
VERFAHREN ZUR BEHANDLUNG VON MENSCHLICHER MILCH
PROCÉDÉ DE TRAITEMENT DU LAIT HUMAIN

(30) Priority: 30.03.2006 US 787727 P
(43) Date of publication of application: 31.12.2008
(73) Proprietor: Medela Holding AG, 6340 Baar (CH)
(72) Inventor: HARTMANN, Peter, Edwin, Gooseberry Hill, W.A. 6076 (AU); KEIL, Anthony, David, Karrinyup, W.A. 6018 (AU); TRENGOVE, Naomi, Jean, Trigg, W.A. 6029 (AU); PRIME, Danielle, Kaye, Gnangara, W.A. 6065 (AU)
(74) Representative: Bremi, Tobias Hans
(86) International application number: PCT/CH2007/000155
(87) International publication number: WO 2007/112607

(56) References cited:
- WO-A-00/74494
- WO-A-2005/092110
- GB-A- 2 374 791
- GB-A- 190 108 505
- US-A1- 2002 031 462
- US-A1- 2002 182 243
- DHAR J ET AL: "Pasteurization efficiency of a HTST system for human milk" JOURNAL OF FOOD SCIENCE, INSTITUTE OF FOOD TECHNOLOGISTS, CHICAGO, IL, US, vol. 61, no. 3, 1996, pages 569-572,595, XP002152880 ISSN: 0022-1147

## Description

### TECHNICAL FIELD

The invention relates to the field of heat treatment of human milk.

### BACKGROUND OF THE INVENTION

Heat treatment of milk is well known in the field of treatment of cow's milk but equally in the field of treatment of human milk. The aim of the heat treatment is generally to remove microbial and/or viral contamination of the milk. Clearly a highly efficient and lasting removal of these contaminations is desired while keeping the valuable constituents of the milk in a substantially unaltered state.

For a general overview over heat treatment of human milk reference is made to the introductory portion of WO 00/74494. Specific attention is drawn to the so-called Holder-pasteurisation for the removal of microbial contamination, which in an exemplary embodiment is described to involve a heat treatment during 30 minutes at a holding temperature of 62.5°C. The specific disclosure of WO 00/74494 and the actual invention described therein pertains to a very short time heat treatment namely it is described that a treatment of human milk at a temperature of at least 65°C during a time span of at most 20 seconds, possibly combined with rotational motion during the heat treatment, should lead to a deactivation of specific microorganisms, namely the Cytomegalovirus (CMV) as well as Staphylococcus, while at the same time keeping the immunological properties of the milk unchanged.

US 2002/0031462 describes heat treatment of milk for the removal of the HIV virus for bottle feeding term babies. It is proposed to apply a heat treatment step at 62°C during a time period of 30 minutes in ready to use feed volumes.

WO-A-2005092110 discloses a device and a method for the treatment of mother milk, wherein a milk container is moved, e.g. rotated, to form a milk film on its inner wall, then the milk is heated during a heating phase up to a treatment temperature below about 65° C. The milk is held at this treatment temperature for a length of time of less than 20 seconds before being cooled down to room temperature. The corresponding milk treatment device comprises an arrangement for holding and moving, e.g. rotating, a container, a heat source for heating the milk up to a treatment temperature, and a cold source for cooling the milk down to room temperature. Moreover, a common tempering chamber is provided in which the rotating container can be exposed to both the heating effect of the heat source and the cooling effect of the cold source.

### SUMMARY OF THE INVENTION

The objective problem underlying the present invention is therefore to provide an improved method for heat treatment of human milk, in particular for a broadband and lasting removal of bacterial and/or viral contamination, while keeping the most important immunologically active constituents of the milk substantially unchanged.

Surprisingly it has been found in extensive research that only in a very narrow temperature range and only if such temperature is applied during a specific time span, indeed bacterial and/or viral contamination can lastingly and for a broad range of bacteria/viruses be removed from human milk while keeping the most important immunological constituents in unaltered state. Already the slightest deviation from either the narrow temperature range or the applied time span either leads to an insufficient protection from bacterial and/or viral contamination or irreversibly destroys or renders inactive the most important immunological constituents of human milk.

Specifically a method for heat treatment of human milk was found as claimed in claim 1 complying with the above requirements, wherein the milk is kept at an elevated temperature in the narrow range of 57-61 °C during a time span in the range of 5-60 minutes, with the proviso that for temperatures above 60°C (but still below 61 °C of course) the milk is kept at this elevated temperature for less than 30 minutes, wherein the elevated temperature is applied in intervals of elevated temperature and intermediate intervals of a temperature at least 20°C below the value of the elevated temperature, wherein the time span is given by the accumulated time of the intervals of elevated temperature, and wherein preferably the temperature in the intermediate interval is below room temperature, preferably at below 10°C or at below 4-6°C. It was found that only in this very specific window an efficient process is possible. If the temperature is kept below the given temperature range or if the heat treatment is applied for a time shorter than the time span given, there is insufficient broadband microbial and viral protection. If on the other hand a temperature above the given range is applied or the heat treatment is applied for a longer time span, the immunologically important constituents like for example lactoferrin, lysozyme, IgA, sIgA (representing ∼38% of the total protein content of human milk), IgM, IgG, lipoprotein lipase, bile salt activated lipase, Vitamin A, Vitamin B12, oligosaccharides, free fatty acids, monoglycerides, folic acid, and of those in particular lactoferrin, sIgA, and lysozyme, start to degrade and to lose efficiency very quickly. Only in this very narrow window of conditions both requirements (broadband removal of microbial and/or viral contamination on the one hand and not altering the immunologically active constituents) can indeed be fulfilled.

Even higher specificity can be achieved if the human milk is kept at a temperature in the range of 59-61 °C. If instrumentation allows, even better microbial and/or viral protection can be achieved while keeping the immunological constituents in an unaltered state, if the human milk is kept at a temperature in the range of 59-60°C.

According to a first preferred embodiment the elevated temperature is applied during a time span of at least 15 minutes and not more than or less than 30 minutes.

According to the invention a temperature profile is cycled or specifically tailored. According to the invention the elevated temperature is applied in intervals (e.g. of up to several minutes) of elevated temperature and intermediate intervals (e.g. of up to several minutes) of a temperature at least 20°C below the value of the elevated temperature (preferably well below room temperature, e.g. at below 10°C or at below 4-6°C), wherein the time span is then given by the accumulated time of the intervals of elevated temperature. The heating and cooling times may be chosen quite short as microbial viability is greatly affected by rapid changes in temperature.

According to a further preferred embodiment, from approximately room temperature to the elevated temperature a rise time of in the range of 10 - 120 seconds is applied, and wherein from elevated temperature to e.g. approximately room temperature (preferably well below room temperature, e.g. below 10°C or below 4-6°C) a decay time of in the range of 10-120 seconds is applied.

The present invention also relates to the use of a method as given above for the production of microbiologically and/or virally safe breast milk while keeping the level of at least one of the following constituents at a value substantially equal to the value of untreated human milk: lactoferrin, lysozyme, IgA, sIgA, IgM, IgG, lipoprotein lipase, bile salt activated lipase, Vitamin A, Vitamin B12, oligosaccharides, free fatty acids, monoglycerides, folic acid, and of those in particular lactoferrin, sIgA, and lysozyme.

The present invention also relates to the use of milk treated as above for the feeding of preterm babies.

Further embodiments of the present invention are outlined in the dependent claims.

### SHORT DESCRIPTION OF THE FIGURES

In the accompanying drawings preferred embodiments of the invention are shown in which:
- Figure 1: is a schematic view of the individual steps of the pasteurising of human milk, wherein a) shows the step of thawing; b) shows the step of dosing; c) shows the step of heat treatment; d) shows the step of bottling of the milk ;
- Figure 2: is a view of a possible apparatus for the treatment of human milk;
- Figure 3: shows the results of the bacterial culture after pasteurisation;
- Figure 4: shows the results of the sIgA levels after pasteurisation;
- Figure 5: a) shows the results of the lactoferrin levels after pasteurisation; and b) shows the details of the lactoferrin levels around the critical temperature.

### DETAILED DESCRIPTION OF THE PREFERRED EMBODIMENTS

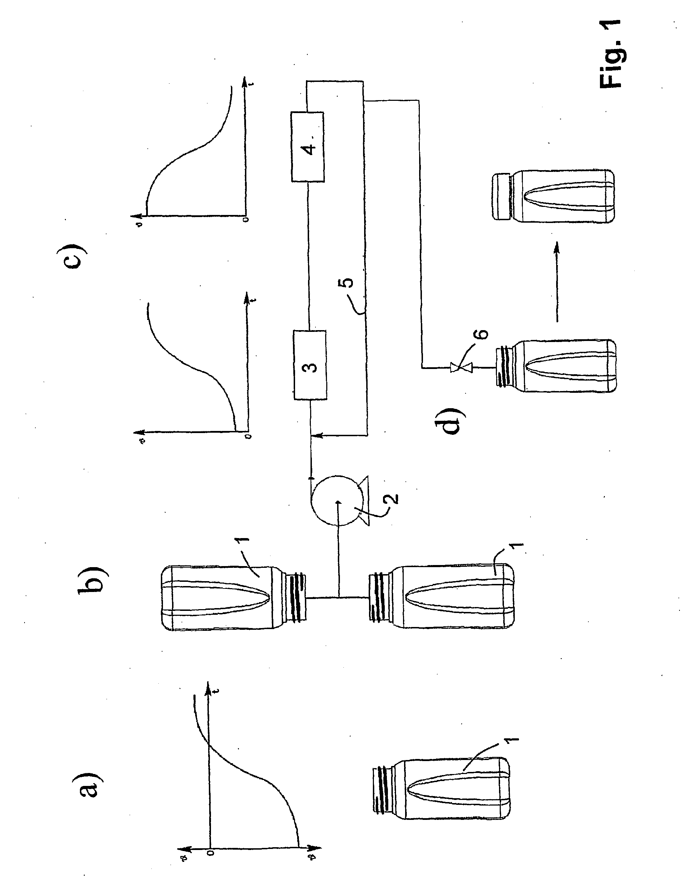

Referring to the drawings, which are for the purpose of illustrating the present preferred embodiments of the invention and not for the purpose of limiting the same, figure 1 shows in a schematic display the individual steps of the heat treatment of human milk. Since human milk is usually stored in frozen state, the first step is usually given by defrosting the milk (internal or external), which is kept in a milk bottle 1, as indicated in figure 1a). Usually for this step a time in the range of 5-60 minutes is allowed for reaching approximately room temperature.

In the next step, the milk is dosed from the milk bottle(s) 1 by means of a milk pump into a holding chamber 8 (figure 1c). In this holding chamber 8 the actual heat treatment takes place, involving at least one heating step 3 and at least one cooling step 4. As indicated schematically, also a sequence of intervals with heating steps and cooling steps is possible by repeating (reference 5). To ensure that all milk has the same conditioning single portions and bigger quantities should be treated. After the heat treatment in a temperature window as given above and within a time span as detailed above the milk is ready to be bottled as is schematically indicated in figure 1d). In this last step the milk bottle 1 is also sealed and labelled with time and date, batch number, etc..

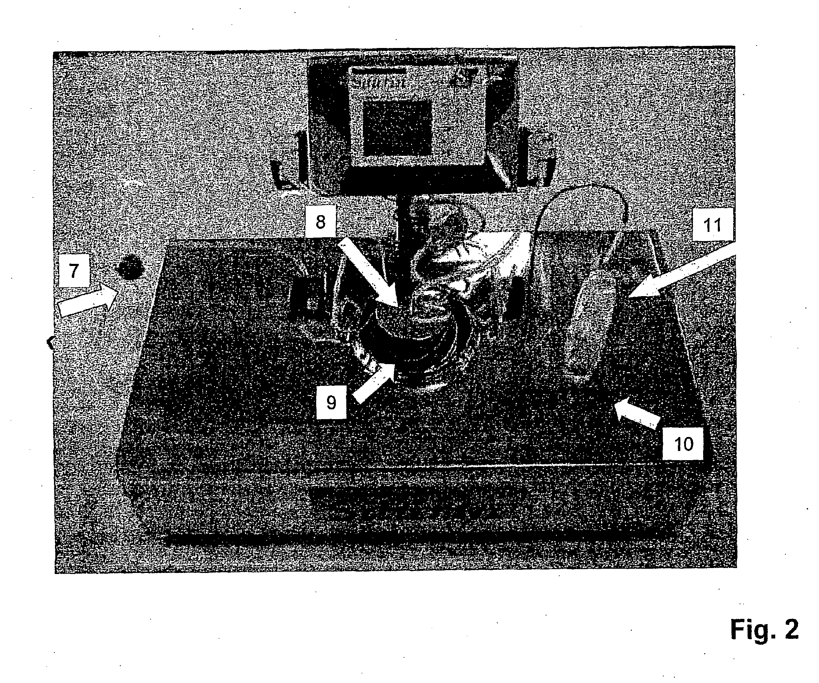

Figure 2 shows a device which can be used for such a procedure. On the left-hand side one can see the input means 7 for the donated breast milk, which allow to transfer human milk to the holding chamber 8. This area is provided with a heating coil 9 allowing to smoothly heat the human milk in the holding chamber 8. The display and control means on top allow to adjust and monitor the temperature, and since in the holding chamber also a temperature sensor is located, this allows to control the temperature to remain in the claimed range. Subsequently the heat treated human milk is guided by a tubing to a chilling compartment 10, and subsequently the pasteurised breast milk 11 can be bottled and labelled as schematically indicated in figure 1d).

In order to evaluate the specificity of the temperature range and the time span used, extensive experiments were carried out. As a matter of fact, first 4 temperatures were measured, namely 40, 57, 63 and 72 °C and then also detailed measurements around the critical temperature range. Five or six samples were measured and subjected to heat treatment at the temperatures and for analysis probes were taken at various time intervals, namely at 0, 15, 30 and 45 minutes as well as one probe without any treatment (labelled "Pre") and one probe after the heat treatment, that is shortly after the milk samples have been chilled to ∼6°C (labelled "Post").

On the one hand the bacterial efficacy of this treatment was assessed by means of a standard culture test in order to check a sufficient bacterial protection by the heat treatment: Each milk sample was cultured onto 5% horse blood agar plates and incubated for 48 hours at 35°C. After incubation any microbial growth was identified to species level using standard microbiological methods.

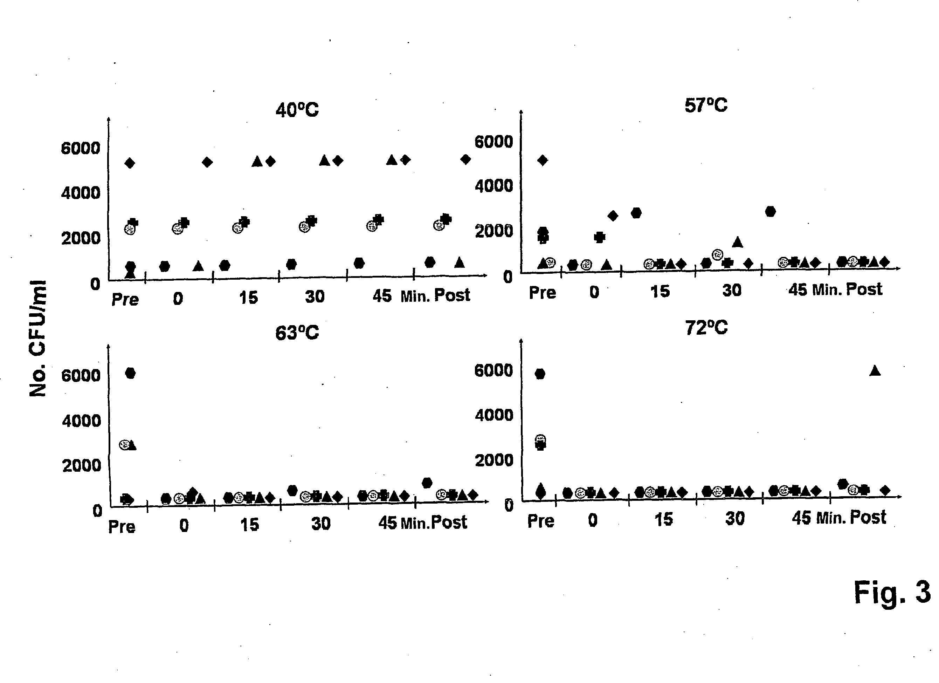

The results of these measurements are summarised in figure 3. One can see that indeed the removal of bacterial contaminations very specifically starts at 57°C, and further detailed investigations revealed that an even more pronounced broadband efficiency of the bacterial removal as to be found in the appended claims, namely at a minimum temperature of 59°C is possible if the heat treatment is applied within an (accumulated) time span of 5-60 minutes, wherein care should be taken if the temperature rises above 60°C, since then a time interval of less than 30 minutes should be chosen.

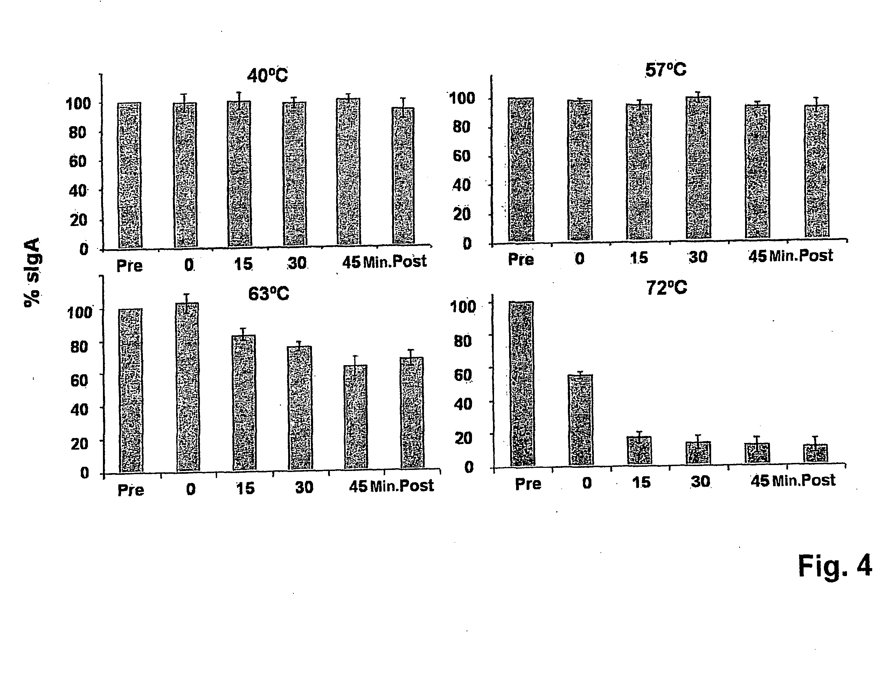

Figure 4 shows the results of the sIgA-levels after the pasteurisation. Indeed at temperatures above 61°C the sIgA levels of starts to drop significantly.

The results of the measurement of lactoferrin are given in table 1 below.

**Table 1:**

| 40 (n=5) | Time point (min) | 1 | 2 | 3 | 4 | 5 | 6 | | Avg | SD | SEM | % change |
|---|---|---|---|---|---|---|---|---|---|---|---|---|
| | Pre | 0.74 | 0.87 | 0.91 | 0.81 | 1.04 | | | 0.87 | 0.11 | 0.05 | 100.00 |
| | 0 | 1.02 | 0.79 | 0.85 | 0.95 | 1.16 | | | 0.96 | 0.14 | 0.06 | 109.83 |
| | 15 | 0.85 | 0.85 | 0.87 | 0.94 | 0.97 | | | 0.89 | 0.05 | 0.02 | 102.67 |
| | 30 | 0.88 | 0.83 | 0.92 | 0.90 | 0.94 | | | 0.89 | 0.04 | 0.02 | 102.37 |
| | 45 | 0.75 | 0.76 | 0.82 | 1.11 | 0.80 | | | 0.85 | 0.15 | 0.07 | 97.33 |
| | Post | 0.65 | 0.68 | 0.88 | 1.01 | 0.84 | | | 0.81 | 0.15 | 0.07 | 93.07 |
| | RT | | | | 1.03 | 0.68 | | | 0.86 | 0.25 | 0.18 | 98.17 |

| 57 (n=5) | | | | | | | | | | | | |
|---|---|---|---|---|---|---|---|---|---|---|---|---|
| | Pre | 0.70 | 0.92 | 1.09 | 0.61 | 0.94 | | | 0.85 | 0.19 | 0.09 | 100.00 |
| | 0 | 0.80 | 0.56 | 1.07 | 0.79 | 0.94 | | | 0.83 | 0.19 | 0.08 | 97.79 |
| | 15 | 0.84 | 0.52 | 1.08 | 0.81 | 0.93 | | | 0.84 | 0.21 | 0.09 | 97.86 |
| | 30 | 0.87 | 0.56 | 0.94 | 0.79 | 0.99 | | | 0.83 | 0.17 | 0.08 | 97.16 |
| | 45 | 0.76 | 0.43 | 0.98. | 0.94 | 0.89 | | | 0.80 | 0.22 | 0.10 | 93.89 |
| | Post | 0.76 | 0.47 | 0.94 | 0.66 | 0.74 | | | 0.72 | 0.17 | 0.08 | 83.84 |
| | RT | 0.96 | 0.96 | 1.06 | 0.66 | 0.75 | | | 0.86 | 0.19 | 0.09 | 100.35 |

| 63 (n=6) | | | | | | | | | | | | |
|---|---|---|---|---|---|---|---|---|---|---|---|---|
| | Pre | 0.83 | 0.60 | 0.78 | 0.85 | 0.82 | 0.82 | | 0.78 | 0.09 | 0.04 | 100.00 |
| | 0 | 0.27 | 0.57 | 0.47 | 0.46 | 0.95 | 0.93 | | 0.61 | 0.27 | 0.11 | 77.33 |
| | 15 | 0.23 | 0.17 | 0.07 | 0.08 | 0.15 | 0.22 | | 0.15 | 0.07 | 0.03 | 19.35 |
| | 30 | 0.15 | 0.04 | 0.06 | 0.05 | 0.18 | 0.15 | | 0.10 | 0.06 | 0.03 | 13.21 |
| | 45 | 0.16 | 0.09 | 0.06 | 0.01 | 0.13 | 0.23 | | 0.11 | 0.08 | 0.03 | 14.10 |
| | Post | | -0.16 | 0.12 | -0.03 | 0.09 | 0.15 | | 0.03 | 0.13 | 0.06 | 4.41 |
| | RT | | | 0.84 | 0.78 | 0.82 | 0.98 | | 0.85 | 0.09 | 0.04 | 108.96 |

| 72 (n=6) | | | | | | | | | | | | |
|---|---|---|---|---|---|---|---|---|---|---|---|---|
| | Pre | 0.91 | 0.91 | 1.01 | 1.20 | 1.08 | 0.83 | | 0.99 | 0.14 | 0.06 | 100.00 |
| | 0 | -0.01 | -0.07 | 0.01 | 0.21 | 0.08 | -0.04 | | 0.03 | 0.10 | 0.04 | 3.12 |
| | 15 | -0.06 | -0.10 | 0.01 | 0.02 | 0.05 | -0.03 | | -0.02 | 0.05 | 0.02 | -1.89 |
| | 30 | -0.10 | -0.09 | -0.03 | 0.08 | 0.01 | -0.03 | | -0.03 | 0.07 | 0.03 | -2.74 |
| | 45 | -0.08 | -0.10 | -0.05 | 0.07 | 0.03 | -0.04 | | -0.03 | 0.07 | 0.03 | -2.72 |
| | Post | -0.09 | -0.09 | -0.05 | 0.04 | -0.04 | -0.05 | | -0.05 | 0.05 | 0.02 | -4.54 |
| | RT | | | 1.03 | 0.96 | 0.59 | 0.84 | | 0.86 | 0.20 | 0.10 | 86.37 |

| 62 (n=5) | | | | | | | | | | | | |
|---|---|---|---|---|---|---|---|---|---|---|---|---|
| | Pre | 0.93 | 1.00 | 0.91 | 1.13 | 0.85 | | | 0.96 | 0.11 | 0.05 | 100.00 |
| | 0 | 1.05 | 1.09 | 0.93 | 1.11 | 0.92 | | | 1.02 | 0.09 | 0.04 | 105.94 |
| | 15 | 0.83 | 0.73 | 0.55 | 0.72 | 0.56 | | | 0.68 | 0.12 | 0.05 | 70.28 |
| | 30 | 0.68 | 0.50 | 0.41 | 0.51 | 0.44 | | | 0.51 | 0.11 | 0.05 | 52.68 |
| | | | | | | | | | | | | |

| 60 (n=5) | | | | | | | | | | | | |
|---|---|---|---|---|---|---|---|---|---|---|---|---|
| | Pre | 0.83 | 0.77 | 0.71 | 0.93 | 0.91 | | | 0.83 | 0.09 | 0.04. | 100.00 |
| | 0 | 0.84 | 0.81 | 0.79 | 1.00 | 0.86 | | | 0.86 | 0.08 | 0.04 | 103.56 |
| | 15 | 0.81 | 0.66 | 0.62 | 0.89 | 0.81 | | | 0.76 | 0.12 | 0.05 | 91.21 |
| | 30 | 0.85 | 0.61 | 0.55 | 0.93 | 0.94 | | | 0.78 | 0.19 | 0.08 | 93.31 |

The measurements designated with RT each refer to a sample that was taken from the initial donor milk and left to sit at room temperature for the duration of the pasteurisation process in order to act as a control that it was in fact the heat impacting the proteins, not time.

The measurements designated with Post each refer to a sample taken from the milk once it had exited the machine and cooled to 4°C, this was within a few minutes of exiting the system.

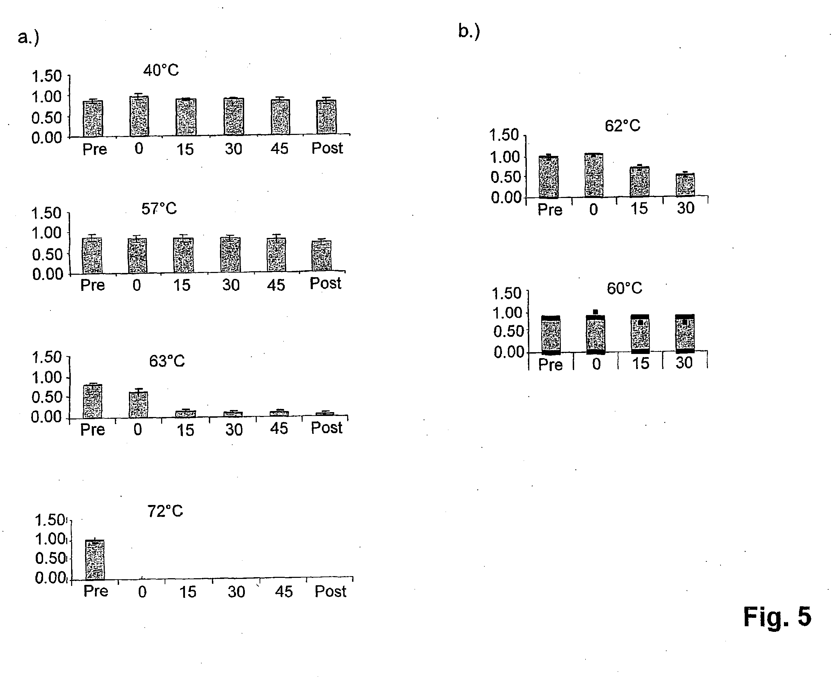

The results are graphically illustrated in figure 5 a) and b). One can clearly see that at a temperature of 62°C already a significant part of the lactoferrin is degraded, while at 60°C hardly any effect is noted on the lactoferrin level.

So the results show that at 62°C most of the lactoferrin is lost whereas at e.g. 60°C so up to 61°C the protein is retained.

The detection of lactoferrin was by using a specific polyclonal antibody to lactoferrin so that at 62°C the protein was altered to the extent that the antibodies did not recognise it (bind to it). Therefore one can safely assume that it has also lost its function as most functions depend on the specific structure of a protein.

Similar results were obtained for lysozyme in that its activity was retained at 60°C so up to 61°C but lost at 62°C.

### LIST OF REFERENCE NUMERALS

- 1: milk bottle
- 2: pump
- 3: heating step
- 4: cooling step
- 5: repetition
- 6: bottling of milk
- 7: input of donated breast milk
- 8: holding chamber
- 9: heating coil
- 10: chilling compartment
- 11: pasteurised breast milk

## Claims

1. A method for heat treatment of human milk, wherein the milk is kept at an elevated temperature in the range of 57-61°C during a time span in the range of 5-60 minutes, with the proviso that for temperatures above 60°C the milk is kept at this temperature for not more than 30 minutes, and wherein the elevated temperature is applied in intervals of elevated temperature and intermediate intervals of a temperature at least 20°C below the value of the elevated temperature, wherein the time span is given by the accumulated time of the intervals of elevated temperature, and wherein preferably the temperature in the intermediate interval is below room temperature, preferably at below 10°C or at below 4-6°C.

2. A method according to claim 1, wherein the human milk is kept at a temperature in the range of 59-61°C.

3. A method according to any of the preceding claims, wherein the human milk is kept at a temperature in the range of 59-60°C.

4. A method according to any of the preceding claims, wherein the elevated temperature is applied during a time span of at least 15 minutes and not more than 30 minutes.

5. A method according to any of the preceding claims, wherein the elevated temperature is held constant during the time span.

6. A method according to any of the preceding claims, wherein from approximately room temperature to the elevated temperature a rise time of in the range of 10 - 120 seconds is applied, and wherein from elevated temperature to approximately room temperature or preferably a temperature below room temperature a decay time of in the range of 10-120 seconds is applied.

7. Use of a method according to any of the preceding claims for the production of microbiologically and/or virally safe breast milk while keeping the level of at least one of the following constituents at a value substantially equal to the value of untreated human milk: lactoferrin, lysozyme, IgA, sIgA, IgM, IgG, lipoprotein lipase, bile salt activated lipase, Vitamin A, Vitamin B12, oligosaccharides, free fatty acids, monoglycerides, folic acid.

8. Use of milk treated as given in any of claims 1-6 for the feeding of preterm babies.

## Patentansprüche

1. Verfahren zur Wärmebehandlung von menschlicher Milch, wobei die Milch für eine Zeitspanne von im Bereich von 5-60 Minuten bei einer erhöhten Temperatur von im Bereich von 57-61°C gehalten wird, mit der Massgabe, dass für Temperaturen über 60°C die Milch nicht länger als 30 Minuten bei dieser Temperatur gehalten wird, und wobei die erhöhte Temperatur in Intervallen von erhöhter Temperatur und Zwischenintervallen einer Temperatur von mindestens 20°C unter dem Wert der erhöhten Temperatur angewandt wird, wobei die Zeitspanne sich durch die kumulierte Zeit der Intervalle der erhöhten Temperatur ergibt, und wobei vorzugsweise die Temperatur im Zwischenintervall unterhalb der Raumtemperatur liegt, vorzugsweise unterhalb von 10°C oder unterhalb von 4-6°C.

2. Verfahren nach Anspruch 1, wobei die menschliche Milch bei einer Temperatur im Bereich von 59-61 °C gehalten wird.

3. Verfahren nach einem der vorhergehenden Ansprüche, wobei die menschliche Milch bei einer Temperatur im Bereich von 59-60°C gehalten wird.

4. Verfahren nach einem der vorhergehenden Ansprüche, wobei die erhöhte Temperatur während einer Zeitspanne von mindestens 15 Minuten und nicht länger als 30 Minuten angewandt wird.

5. Verfahren nach einem der vorhergehenden Ansprüche, wobei die erhöhte Temperatur während der Zeitspanne konstant gehalten wird.

6. Verfahren nach einem der vorhergehenden Ansprüche, wobei eine Erwärmungszeit von im Bereich von 10-120 Sekunden von etwa Raumtemperatur bis zur erhöhten Temperatur angewandt wird, und wobei eine Abkühlungszeit von im Bereich von 10-120 Sekunden von der erhöhten Temperatur bis etwa Raumtemperatur angewandt wird.

7. Verwendung eines Verfahrens nach einem der vorhergehenden Ansprüche zur Herstellung von mikrobiologisch- und oder viral sicherer Brustmilch, wobei der Gehalt mindestens eines der folgenden Komponenten bei einem Wert gehalten wird, der im Wesentlichen dem Wert von unbehandelter menschlicher Milch entspricht: Lactoferrin, Lysozym, IgA, sIgA, IgM, IgG, Lipoproteinlipase, Gallensalz-aktivierte Lipase, Vitamin A, Vitamin B12, Oligosaccharide, freie Fettsäuren, Monoglyzeride, Folsäure.

8. Verwendung von gemäss einem Verfahren nach einem der Ansprüche 1-6 behandelter Brustmilch zur Fütterung von Frühgeburt-Babies.

## Revendications

1. Procédé de traitement par la chaleur du lait humain, dans lequel le lait est maintenu à une température élevée située dans la plage de 57-61°C pendant une durée située dans la plage de 5-60 minutes, avec la condition que pour les températures supérieures à 60°C, le lait est maintenu à cette température pendant pas plus de 30 minutes, et dans lequel la température élevée est appliquée par intervalles de température élevée et intervalles intermédiaires d'une température d'au moins 20°C en-dessous de la valeur de la température élevée, sachant que la durée est donnée par le temps accumulé des intervalles de température élevée, et dans lequel de préférence, la température dans l'intervalle intermédiaire est inférieure à la température ambiante, de préférence inférieure à 10°C ou inférieure à 4-6°C.

2. Procédé selon la revendication 1, dans lequel le lait humain est maintenu à une température située dans la plage de 59-61°C.

3. Procédé selon la revendication 1 ou 2, dans lequel le lait humain est maintenu à une température située dans la plage de 59-60°C.

4. Procédé selon l'une quelconque des revendications précédentes, dans lequel la température élevée est appliquée pendant une durée d'au moins 15 minutes et de pas plus de 30 minutes.

5. Procédé selon l'une quelconque des revendications précédentes, dans lequel la température élevée est maintenue constante pendant la durée.

6. Procédé selon l'une quelconque des revendications précédentes, dans lequel, à partir d'environ la température ambiante à la température élevée, on applique une durée de montée située dans la plage de 10-120 secondes, et dans lequel de la température élevée à environ la température ambiante, ou de préférence à une température en-dessous de la température ambiante, une durée de descente située dans la plage de 10-120 secondes est appliquée.

7. Emploi d'un procédé selon l'une quelconque des revendications précédentes pour la production de lait humain sûr sur le plan microbiologique et/ou viral tout en maintenant le niveau d'au moins un des constituants suivants à une valeur essentiellement égale à la valeur du lait humain non traité : lactoferrine, lysozyme, IgA, sIgA, IgM, IgG, lipoprotéine lipase, lipase activée par les sels biliaires, vitamine A, vitamine B12, oligosaccharides, acides gras libres, monoglycérides, acide folique.

8. Emploi de lait traité comme indiqué selon l'une quelconque des revendications 1-6 pour l'alimentation des bébés prématurés.
